# EUROPEAN PATENT APPLICATION

(11) **EP 3 852 330 A1**
(43) Date of publication of application: **21.07.2021**
(21) Application number: 20152644.9
(22) Date of filing: 20.01.2020
(51) Int. Cl.: H04L 29/06, G06F 21/32

(54) **TELEPHONE CALL AUTHENTICATION**

(71) Applicant: Aletheaid Limited, London EC2A 2EW (GB)
(72) Inventor: WHITELAW, Lindsay, London W2 3UW (GB); DORAN, Craig, London SW1V 3PN (GB)
(74) Representative: Cupitt, Philip Leslie

(57) **Abstract**

A method of authenticating a participant in a telephone call comprises acquiring (502) biometric data from a first participant in the telephone call. The identity of the first participant is verified (504) by comparing the acquired biometric data with reference biometric data (207, 307), which has been previously obtained from an identity document. An authentication message is sent (506) to a second participant in the telephone call. The authentication message indicates that the identity of the first participant has been verified.

## Description

The present disclosure relates to telecommunications. In particular, the disclosure relates to techniques for authenticating one or more participants in a telephone call.

Telephone calls are a common way for two or more people (hereafter referred to as participants) to communicate. A telephone call typically involves one participant initiating a call to another participant. The call can be initiated, for example, by one participant dialling a telephone number of the other participant.

There is currently no secure way for either participant to verify the identity of the other participant. A commonly-used technique for verifying the identity of a first participant in a telephone call involves a second participant asking the first participant to answer a question (sometimes known as a "security question"). The answer to the security question is assumed to be known only by the first participant, such that the identity of the first participant is deemed to be verified if he/she can provide the correct answer. However, this technique is inherently insecure because the answer to the security question may be known by others, and because it requires the first participant to divulge the answer to the second participant. Furthermore, this technique can result in an impasse when the first participant refuses to answer the security question unless the second participant verifies his/her identity, yet the second participant refuses to verify his/her identity unless the first participant answers the security question correctly.

Other techniques for verifying the identity of a participant include entering a personal identification number ("PIN") code and voice verification. These techniques introduce a vulnerability when a first participant divulges information to a second participant whose identity is unverified, and can lead to a fraudster gaining credentials that can be used to impersonate the first participant.

### Summary

The present disclosure provides methods and apparatuses for securely authenticating one or more participants in a telephone call.

In accordance with a first aspect, a method of authenticating a participant in a telephone call is provided. The method comprises: acquiring biometric data from a first participant in the telephone call; verifying the identity of the first participant by comparing the acquired biometric data with reference biometric data, the reference biometric data having been previously obtained from an identity document that identifies the first participant; and sending an authentication message to a second participant in the telephone call, the authentication message including an indication that the identity of the first participant has been verified.

The authentication message allows the second participant to confirm the identity of the first participant. A high level of security is afforded by the use of biometric data to verify the identity of the first participant, because biometric data cannot easily be forged. Security is further strengthened by the use of reference biometric data that has been obtained from an identity document (e.g., a passport, driving licence or identity card) as the basis for verifying the identity of the first participant, because the first participant's identity has already been independently verified by the authority that issued the identity document. The present disclosure can thus help to prevent a fraudster impersonating the first participant during a telephone call to the second participant.

As used herein, the terms "authentication" and "authenticating" generally refer to verifying the identity of a participant. Thus, a participant is said to be "authenticated" if his/her identity has been verified.

The biometric data may be acquired at a first communication device used by the first participant. The reference biometric data may be obtained from the identity document at the first communication device, or at any other suitable device.

The acquired biometric data may be compared with the reference biometric data by the first communication device, by an authentication server, or by a combination of both. By comparing the acquired biometric data with the reference biometric data at the first communication device, the first participant's biometric data does not leave the first communication device. This can allow the first participant to prevent dissemination of their biometric data, and can also reduce the risk of replay attacks that might result from the biometric data being insecurely stored and/or transmitted away from the first communication device. By comparing the acquired biometric data with the reference biometric data at the authentication server, the risk of the authentication method being falsified by compromising the first communication device (or an authentication application executed thereon) can be reduced.

The authentication message may be sent by the first communication device, by the authentication server, or by a combination of both. For example, the authentication message may be generated at the first communication device, and then sent directly from the first communication device to a second communication device used by the second participant in the telephone call (i.e., without being sent via the authentication server). In another example, the authentication message may be generated at the authentication server, then sent to the second communication device. In yet another example, the authentication message may be generated at the first communication device, then sent to the authentication server, and then forwarded by the authentication server to the second communication device. In the latter example, the authentication server may verify the authentication message received from the first communication device (e.g., by checking a cryptographic signature in the message) to confirm its authenticity before forwarding it to the second communication device. In yet another example, the authentication message may be generated at the first communication device, then sent to the authentication server. Upon receiving the authentication message from the first communication device, the authentication server may create a new authentication message that includes an indication that the identity of the first participant has been verified, which is sent to the second communication device.

The method may optionally further comprise initiating the telephone call from a first communication device used by the first participant to a second communication device used by the second participant. In some examples, the telephone call can be initiated via a public switched telephone network (PSTN). The telephone call can thus be conducted directly between the communication device and the second communication device, without requiring the telephone network to include specialised equipment to enable authentication.

The authentication message may be sent before initiating the telephone call. By sending the authentication message before initiating the telephone call, the second participant can be informed of the verified identity of the first participant before accepting the telephone call. This, in turn, can help to prevent a fraudster impersonating the first participant. It can also allow the second participant to decline calls from callers whose identity is not verified, or from callers whose identity is verified but whose calls are unwanted.

The method may optionally further comprise receiving the telephone call at a first communication device used by the first participant. The telephone call may be initiated at a second communication device used by the second participant. Acquiring the biometric data from the first participant, verifying the identity of the first participant, and sending an authentication message may be performed in response to receiving the telephone call.

Either or both of the first and second participants can be authenticated using the techniques disclosed herein. Authenticating both participants in the manner disclosed herein avoids the previously-mentioned impasse that arises with the use of security questions.

The method may optionally further comprise receiving a second authentication message, the second authentication message including an indication that the identity of a second participant in the telephone call has been verified.

The identity of the second participant may be verified in substantially the same way as the identity of the first participant. Thus, the method may optionally include acquiring biometric data from the second participant and verifying the identity of the second participant by comparing the acquired biometric data with reference biometric data, the reference biometric data having been previously obtained from an identity document that identifies the second participant. The biometric data for the second participant may be acquired at the second communication device (i.e. the communication device used by the second participant). The reference biometric data may be obtained from the second participant's identity document at the second communication device, or at any other suitable device.

The second authentication message may be received by the first communication device, by the authentication server, or by a combination of both. For example, the authentication message may be generated at the second communication device, and then sent directly from the second communication device to the first communication device (i.e., without being sent via the authentication server). In another example, the authentication message may be generated at the authentication server, then sent to the first communication device. In yet another example, the authentication message may be generated at the second communication device, then sent to the authentication server, and then forwarded by the authentication server to the first communication device. In the latter example, the authentication server may verify the authentication message received from the second communication device (e.g., by checking a digital signature in the message) to confirm its authenticity before forwarding it to the first communication device. In yet another example, the authentication message may be generated at the second communication device, then sent to the authentication server. Upon receiving the authentication message from the second communication device, the authentication server may create a new authentication message that includes an indication that the identity of the second participant has been verified, which is sent to the first communication device.

The second authentication message may be received before the telephone call. In this case, the first communication device receives the second authentication message before it sends its own authentication message. The method may optionally further comprise, in response to receiving the second authentication message, creating or updating an entry for the second participant in a contact database of the first communication device. The created or updated entry indicates that the identity of the second participant has been verified. When the telephone call is received, the name of the second participant and an indication that the second participant has been verified can be displayed on the communication device. The first participant can thus be informed of the verified identity of the second participant before accepting the telephone call. Moreover, by including this information in the contact database, it can be accessed and displayed using the communication device's in-built telephony software, which provides a seamless user experience.

The method may optionally further comprise: reading the reference biometric data from the identity document using an identity document reader of the communication device; and storing the reference biometric data on the communication device. Obtaining the reference biometric data directly from the identity document, using the same communication device that is used to acquire the biometric data from the first participant and verify the identity of the first participant, can avoid the biometric data being communicated via a network. Thus, the first participant's biometric data does not leave the communication device.

The telephone call may be conducted via a public switched telephone network, and/or the authentication message may be sent via a data network. Authentication can thus be enabled using an existing PSTN, without requiring the telephone network to include any specialised equipment.

Verifying the identity of the first participant may optionally further comprise authenticating the first participant as a member of an organisation. Examples in accordance with the present disclosure allow either the first or second participant to initiate or receive authenticated telephone calls on behalf of an organisation. Purely by way of example, and without limitation, the organisation may be a company, charity or government body that employs the participant. Thus, by authenticating the participant as a member of the organisation in addition to verifying the identity of the participant himself/herself, fraudulent telephone calls that falsely claim to originate from the organisation can be prevented.

The first participant can be authenticated as a member of the organisation in any suitable manner. For example, the participant can be authenticated using the acquired biometric data, by entering a password into the first communication device, by possession of a physical authentication token, or any combination thereof.

The authentication message may indicate that the first participant has been authenticated as a member of the organisation. For example, the authentication message may include a digital signature. The digital signature may be created using a private key of the organisation, and may be verified using a public key of the organisation. The authentication message allows the second participant to confirm that the first participant is calling on behalf of the organisation. This can allow the second participant to detect fraudulent telephone calls that falsely claim to originate from the organisation.

A further aspect provides a computer program product comprising instructions which, when executed by a computer, cause the computer to perform any of the methods disclosed herein.

A further aspect provides a computer-readable medium comprising instructions which, when executed by a computer, cause the computer to perform any of the methods disclosed herein.

A further aspect provides an apparatus configured to perform any of the methods disclosed herein. For example, the apparatus may comprise one or more processors in communication with a memory. The memory may comprise instructions which, when executed by the one or more processors, cause the apparatus to perform any of the methods disclosed herein. The apparatus may be a communication device or an authentication server as disclosed herein. The apparatus may be a system including one or more such communication devices and an authentication server.

### Brief Description of the Drawings

Embodiments will now be described, purely by way of example, with reference to the accompanying drawings, in which:
Figure 1 is a schematic diagram of a communication system suitable for implementing the present disclosure;
Figure 2 is a schematic diagram of the communication devices shown in Figure 1;
Figure 3 is a schematic diagram of the authentication server shown in Figure 1;
Figure 4 is a flow diagram of a method of registering a participant with the authentication server shown in Figure 3;
Figure 5 is a flow diagram of a method of authenticating a participant in a telephone call;
Figure 6 shows a notification on a display of a communication device before receiving a call from an authenticated participant;
Figure 7 shows a display of a communication device when an incoming call from an authenticated participant is received;
Figure 8 shows a notification on a display of a communication device when a participant is authenticated during a call; and
Figure 9 is a flow diagram of a method of registering an organisation with the authentication server shown in Figure 3.

### Detailed Description

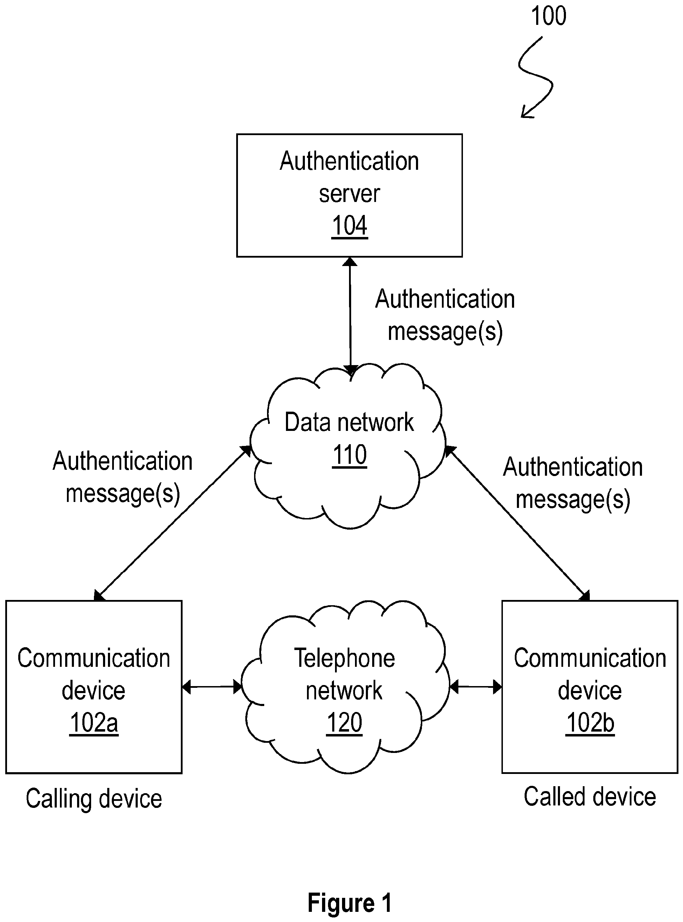

Figure 1 is a schematic diagram of a communication system 100 suitable for implementing a method of authenticating a participant in a telephone call in accordance with the present disclosure. The communication system 100 includes a plurality of communication devices 102a, 102b (collectively referred to as communication devices 102) and an authentication server 104. The term "server" is intended only to facilitate identification, and should not be taken to imply any limitations or requirements on the form or capabilities of that device. Although only two communication devices 102a, 102b are shown in Figure 1 for the sake of simplicity, the present disclosure is applicable to telephone calls involving more than two communication devices 102 (e.g., to effect authentication of one or more participants in a group call or conference call). Similarly, although only one authentication server 104 is shown in Figure 1, the disclosed functionality of the authentication server 104 may be achieved by a plurality of servers. Such a plurality of servers may, or may not, be located at geographically distinct locations, and the disclosed functionality of the authentication server 104 may be distributed between those servers in any suitable manner.

The communication devices 102 are configured to communicate with the authentication server 104 via a data network 110. The data network 110 may include any type of wired and/or wireless data network, and may include the Internet. The communication devices 102 are further configured to conduct a telephone call via a telephone network 120. The telephone network 120 may be a public switched telephone network (PSTN), and may include any type of wired and/or wireless telephone network. For example, the telephone network 120 may include a cellular telephone network. Although the data network 110 and telephone network 120 are shown as separate networks in Figure 1, the functionality of the telephone network 120 could be performed entirely by the data network 110 (e.g., using Voice over Internet Protocol (VoIP) or similar technologies).

For ease of reference, it will be assumed a telephone call is initiated by the communication device 102a and, therefore, communication device 102a may be referred to herein as the "calling device". It will also be assumed that the communication device 102b receives a telephone call initiated by the communication device 102a and, therefore, communication device 102b may be referred to herein as the "called device". A participant who uses the calling device 102a to initiate a telephone call may be referred to herein as the "caller". A participant who uses the called device 102b to receive a telephone call may be referred to herein as the "callee".

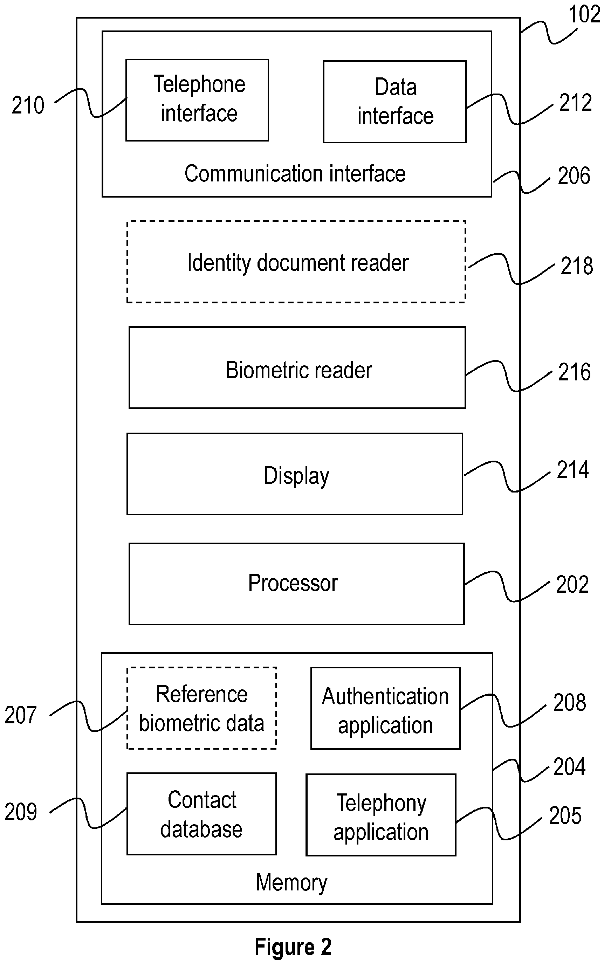

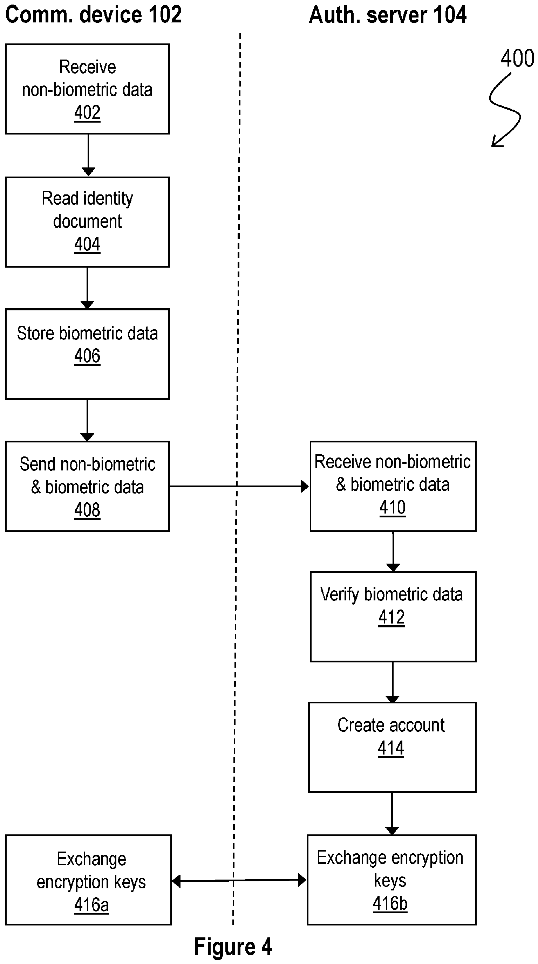

Figure 2 is a schematic diagram of a communication device 102. The communication device 102 may be any type of communication device, such as a smartphone, tablet computer, laptop computer, desktop computer, smart television, or a wearable device (e.g., a smartwatch). The communication device 102 may take the form of a conventional telephone (e.g., an analogue landline telephone, or other legacy telephone lacking the capability to execute programs) coupled to a processing module, whereby the conventional telephone and processing module collectively perform the functionality of the communication device 102 disclosed herein. The communication device 102 comprises a processor 202, a memory 204, a communication interface 206, a display 214 and a biometric reader 216. The communication device 102 may optionally comprise an identity document reader 218, to allow the communication device to perform the method of registering a participant with the authentication server that is described below with reference to Figure 4.

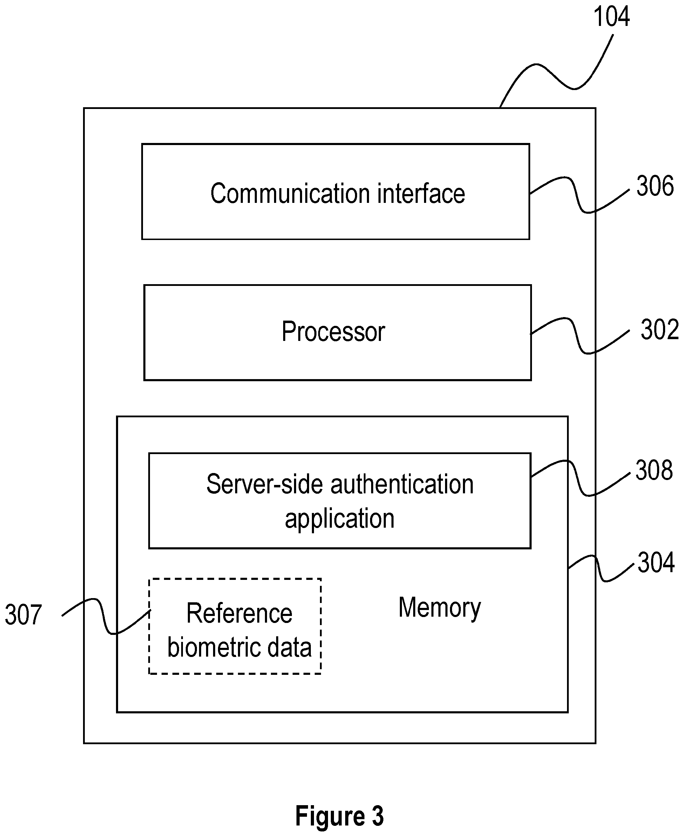

The processor 202 can be any suitable type of data processing device, such as a microprocessor, microcontroller or application specific integrated circuit (ASIC). The memory 204 can include a volatile memory, a non-volatile memory, or both volatile and non-volatile memories. The memory 204 stores a telephony application 205, an authentication application 208, a contact database 209 and, optionally, reference biometric data 207. The telephony application 205 includes processor-executable instructions that, when executed by the processor 202, allow the communication device 102 to make and receive telephone calls. The telephony application 205 may be an in-built application, i.e., an application that forms part of the operating system (OS) of the communication device 102. The authentication application 208 includes processor-executable instructions that, when executed by the processor 202, cause the communication device 102 to perform either or both of the methods described below with reference to Figures 3 and 4. The reference biometric data 207 may be stored in the memory 204 as a consequence of the communication device 102 performing the method of registering a participant with the authentication server that is described below with reference to Figure 4. The contact database 209 is configured to store contact details (e.g., a name and telephone number) of one or more people or organisations that are known to the user of the communication device 102. The contact database 209 may form part of the OS of the communication device 102, and may be otherwise known in the art as a "contact list" or a "telephone book".

The communication interface 206 can include any suitable type of interface that enables the communication device 102 to communicate with other communication devices 102 and the authentication server 104. As shown in Figure 2, the communication interface 206 can include a telephone interface 210 and a data interface 212. The telephone interface 210 may include any type of wired and/or wireless interface that allows the communication device 102 to communicate with other communication devices 102 via the telephone network 120. The data interface 212 may include any type of wired and/or wireless interface that allows the communication device 102 to communicate with the authentication server 104 and other communication devices 102 via the data network 120. The telephone interface 210 is optional, and need not be provided in examples in which the functionality of the telephone network 120 is performed entirely by the data network 110.

The display 214 can be any type of output device that is capable of outputting, to a participant, information regarding the identity of another participant in a telephone call. For example, the display 214 may include a display screen, such as a liquid crystal display (LCD) screen. In this example, the display 214 may be a touchscreen to enable data input. Alternatively or additionally, the display 214 may include a loudspeaker to provide an audible indication of the identity of a participant.

The biometric reader 216 can be any type of device that is capable of acquiring biometric data that allows a particular participant to be identified. In general, the biometric reader 216 is capable of acquiring the same type of biometric data that is stored in an identity document. This allows the identity of the participant to be verified by comparing biometric data from the participant with corresponding biometric data obtained from the participant's identity document, as explained in more detail below.

In one example, the biometric reader 216 includes a camera that is capable of taking a photograph of a participant's face. In this example, the biometric reader 216 may also include software and/or hardware to analyse the photograph in order to extract features of the participant's face that allow the participant to be uniquely identified (or identified with an acceptable level of certainty). For example, features such as the size, shape and position of the participant's eyes, nose, mouth, jaw, cheekbones and/or ears may be extracted from the photograph and used to determine the identity of the participant. It will be appreciated that this is just one example of how facial recognition can be performed, and that many variations are possible. For example, the camera may be a two-dimensional camera or a three-dimensional (depth) camera, either of which may be capable of taking a photograph in the visible and/or infrared regions of the electromagnetic spectrum. Further, the camera may be capable of taking multiple photographs (e.g., a video), which can allow the liveness of the participant to be verified and thereby reduce the risk of the biometric identification process being circumvented. The camera need not be used for facial recognition. For example, the camera may alternatively or additionally be used to take photographs of a participant's iris and/or retina, which may be used to identify the participant.

As noted above, the type(s) of biometric data that the biometric reader 216 can be capable of acquiring is, at least in part, determined by the type(s) of biometric data that is stored on identity documents. Hence, the biometric reader 216 may alternatively or additionally be capable of acquiring other types of biometric data. For example, the biometric reader 216 may be capable of acquiring fingerprints and/or DNA from a participant. The biometric reader 216 may include software and/or hardware to analyse whichever type of biometric data is acquired, in order to identify the participant. Alternatively, the communication device 102 may be configured to transmit biometric data acquired by the biometric reader 216 to another device (e.g., the authentication server 104) that is configured to analyse the biometric data and identify the participant.

The identify document reader 218 includes hardware and/or software that is capable of reading an identify document. In general, the capabilities of the identity document reader 218 are determined by the way in which data is stored on the identity document that is to be read. For example, if the identify document is a biometric passport (e.g., a passport complying with International Civil Aviation Organization Doc 9303 on Machine Readable Travel Documents), the identity document reader 218 can include a radio frequency identity (RFID) reader and a camera. In this example, the identity document reader 218 can be configured to control the camera to capture an image of the machine readable zone (MRZ) of the passport, and to perform optical character recognition (OCR) in order to extract data from the MRZ. The identity document reader 218 can be further configured to control the RFID reader to receive biometric data from an RFID chip on the passport, optionally using a key derived from data extracted from the MRZ. In this manner, the identity document reader 218 can obtain biometric data from a passport. The biometric data can then be stored in the memory 204 as reference biometric data 207. The identity document reader 218 may be capable of reading multiple types of identity document, and can include whatever hardware and/or software is needed to read such documents. Purely by way of example, and without limitation, the identity document reader 218 may alternatively or additionally be capable of reading an identity card (e.g., a national identity card issued by the government of a country) or a driving licence.

Figure 3 is a schematic diagram of the authentication server 104. The authentication server 104 can be any computing device that is capable of authenticating one or more participants in a telephone call to one or more other participants in the telephone call. The authentication server 104 comprises a processor 302, a memory 304, and a communication interface 306.

The processor 302 can be any suitable type of data processing device, such as a microprocessor, microcontroller or application specific integrated circuit (ASIC). The memory 304 can include a volatile memory, a non-volatile memory, or both volatile and non-volatile memories. The memory 304 stores a server-side authentication application 308 and, optionally, reference biometric data 307. The server-side authentication application 308 includes processor-executable instructions that, when executed by the processor 302, cause the authentication server 104 to perform the methods described below with reference to Figure 4. The reference biometric data 307 may be stored in the memory 304 as a consequence of the communication device 102 performing the method of registering a participant with the authentication server that is described below with reference to Figure 4. The communication interface 306 can include any suitable type of wired and/or wireless interface that enables the authentication server 104 to communicate with the communication devices 102 via the data network 120.

Figure 4 is a flow diagram of an example method 400 of registering a participant with an authentication server 104 in accordance with the present disclosure. The purpose of the method 400 is to use an identity document to confirm the identity of the participant. Once the identity of the participant has been confirmed, the participant can be authenticated in a future telephone call.

The method 400 begins at block 402, in which a communication device 102 receives non-biometric data from a participant. For example, the participant may enter their name, telephone number(s) and/or email address into the communication device 102. The communication device 102 may be either the calling device 102a or the called device 102b. However, the method 400 could be performed at another communication device because, once a participant has registered with the authentication server 104, the participant can subsequently be authenticated by the calling device 102a, the called device 102b or any other communication device on which the authentication application 208 is installed.

At block 404, the communication device 102 reads an identity document. More specifically, the communication device 102 uses the identity document reader 218 to read an identity document that identifies the participant, so as to obtain biometric data stored on the identity document. The operations performed at block 404 depend on the manner in which data (and biometric data in particular) is stored on the identity document. For example, if the identify document is a biometric passport, block 404 may include capturing an image of the MRZ of the passport, performing OCR to extract data from the MRZ, deriving a key from data extracted from the MRZ, using the key to unlock the RFID chip on the passport, and receiving biometric data from the RFID chip.

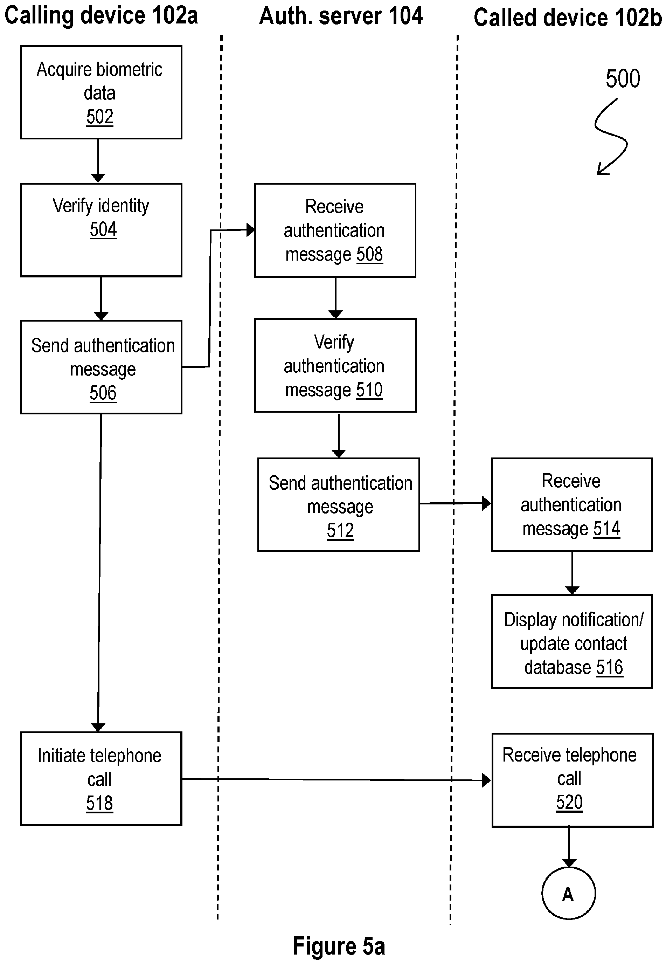

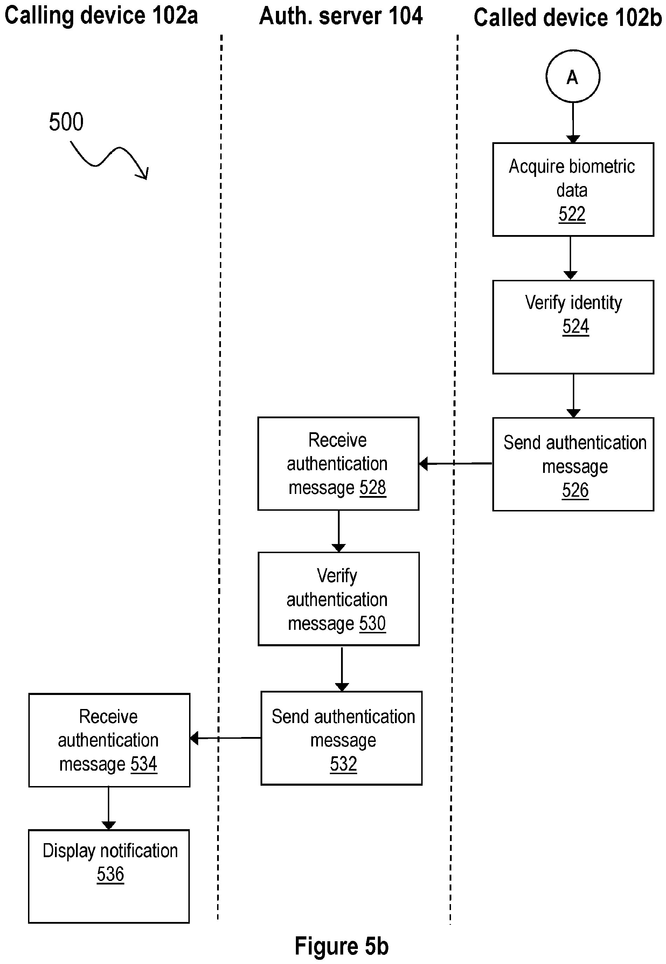

At block 406, the communication device 102 stores the biometric data that was obtained from the identity document at block 404. The biometric data is stored as reference biometric data 207 in the memory 204 of the communication device 102. The biometric data may optionally be processed before being stored as reference biometric data. For example, the biometric data may be encrypted before being stored, so as to prevent unauthorised access to the biometric data. Alternatively or additionally, features may be derived from the "raw" biometric data obtained from the identity document, where such features facilitate subsequent verification of the identity of the participant (as described below in relation to blocks 504 and 524 of Figure 5). The reference biometric data 207 may include the raw biometric data, features derived from the raw biometric data, or both. Block 406 is optional because, in some examples in accordance with the present disclosure, reference biometric data may be stored only at the authentication server 104.

At block 408, the communication device 102 sends the non-biometric data received at block 402 and the biometric data to the authentication server 104. The biometric data that is sent to the authentication server may include the raw biometric data obtained at block 404, features derived from the raw biometric data, or both. Then, at block 410, the authentication server 104 receives the non-biometric data and biometric data. The non-biometric data and biometric data is sent and received via the data network 110. The non-biometric and/or biometric data can be encrypted prior to sending, so as to protect them in the event that communications between the communication device 102 and the authentication sever 104 are intercepted.

At block 412, the authentication server 104 verifies the received biometric data. The purpose of block 412 is to confirm that the biometric data is genuine. For example, verifying the biometric data may include checking that the biometric data was obtained from a genuine identity document and/or checking that the biometric data has not been altered. The operations performed at block 412 depend on the identity document. For example, if the identify document is a biometric passport, block 412 may include obtaining a public key of the authority that issued the passport, and using the public key to verify a digital signature associated with the biometric data. If the received biometric data is successfully verified at block 412, the method proceeds to block 414.

At block 414, the authentication server 104 creates an account for the participant. The account may be a record, stored in the memory 304 of the authentication server 104, which comprises information relating to the participant. In particular, the account may include the non-biometric data and/or the biometric data that was received at block 410. Block 414 may include storing the received biometric data as reference biometric data 307 in the memory 304. The biometric data may optionally be processed before being stored as reference biometric data, as previously discussed in relation to block 406. The reference biometric data 307 may include the raw biometric data, features derived from the raw biometric data, or both. Block 414 need not include storing reference biometric data 307 because, in some examples in accordance with the present disclosure, reference biometric data may be stored only at the communication device 102.

At blocks 416a and 416b, the communication device 102 and authentication server 104 exchange one or more encryption keys. For example, the communication device 102 and authentication server 104 can each generate a public and private key pair, and transmit the respective public key to the other party. The private keys can be used to decrypt and/or digitally sign communications between the communication device 102 and the authentication server 104. The public keys can be used to encrypt communications between the communication device 102 and the authentication server 104 and/or to verify the digital signatures of communications between the communication device 102 and the authentication server 104. Alternatively or in addition, the communication device 102 and authentication server 104 can exchange a symmetric encryption key. The symmetric key can be used to encrypt and decrypt communications between the communication device 102 and the authentication server 104. Any suitable key exchange algorithm, such as the Diffie-Hellman algorithm, can be used to exchange the symmetric key. Whichever form of cryptography is used, the keys exchanged at blocks 416a and 416b can be used to encrypt, decrypt and/or sign any or all of the authentication messages described below with reference to Figure 5, so as to prevent interception and/or falsification of those messages.

Following the exchange of encryption keys at blocks 416a and 416b, the method 400 ends. The participant is thus registered with the authentication server 104. The participant can subsequently be authenticated during a telephone call using the method 500 described below with reference to Figure 5.

The method 400 may optionally further include the authentication server 104 creating a digital certificate. The digital certificate may include the name of the person to whom it is issued (which can be derived from the non-biometric data received at block 410), and may be digitally signed using the private key of the authentication server 104. The authentication server 104 may send the digital certificate to the communication device 102. The participant may use the certificate as a representation of their identity. The certificate may be trusted by any other participant that trusts the authentication server 104 as a root authority.

Figure 5 is a flow diagram of an example method 500 of authenticating one or more participants in a telephone call. The method 500 is performed when at least one participant in the telephone call wishes to prove their identity to the other participant(s).

The method 500 begins at block 502, in which the calling device 102a acquires biometric data from a participant, who will hereafter be referred to as the "caller". The biometric data is acquired using the biometric reader 216 of the calling device 102a. Acquisition of biometric data at block 502 may include performing liveness testing, so as to ensure that the biometric data is acquired from a participant who is physically present at the calling device 102a. Liveness testing thereby reduces the risk of the biometric reader 216 being deceived by falsified biometric data. For example, if the identity of the caller is to be verified by facial recognition, the caller may be instructed (e.g., by an instruction shown on the display 214) to perform a particular gesture or action, such as smiling or blinking. The gesture or action may be selected randomly or pseudo-randomly. In this manner, the facial recognition process cannot be deceived by presenting a photograph of the caller to the biometric reader 216. The nature of the liveness testing will depend upon the type of biometric data that is to be acquired.

At block 504, the calling device 102a verifies the identity of the caller. The identity of the caller is verified by comparing the biometric data acquired at block 502 with reference biometric data. The identity of the caller is deemed to be verified when the acquired biometric matches (i.e., is equal to, or is within an acceptable tolerance of) the reference biometric data.

The operations performed at block 504 depend on various factors, including where the reference biometric data is stored. When the reference biometric data is stored at the calling device 102a, block 504 may include retrieving the reference biometric data 207 from the memory 204 and comparing it with the biometric data acquired at block 502. When the reference biometric data is stored at the authentication server 104, block 504 may include the calling device 102a requesting reference biometric data from the authentication server 104. In response, the authentication server 104 may retrieve the reference biometric data 307 from its memory 304, and transmit it to the calling device 102a. The calling device 102a may receive the reference biometric data 307 and compare it with the biometric data acquired at block 502.

The operations performed at block 504 also depend on the form of the reference biometric data 207, 307. When the reference biometric data 207, 307 is in the form of features derived from "raw" biometric data, the biometric data acquired at block 502 may be processed to derive comparable features. When the reference biometric data 207, 307 is in the form of raw biometric data, both the reference biometric data 207, 307 and the biometric data acquired at block 502 may be processed to derive comparable features. Alternatively or in addition, when the reference biometric data 207, 307 is in the form of raw biometric data, the reference biometric data 207, 307 may be directly compared with the biometric data acquired at block 502.

Figure 5 shows that block 504 is performed at the calling device 102a. In other implementations not shown in Figure 5, block 504 can be performed at the authentication server 104. In such implementations, the biometric data acquired at block 502 (or features derived therefrom) is transmitted to the authentication server 104, whereupon the authentication server 104 performs a comparison with reference biometric data 307 in a manner corresponding to that described above. Nevertheless, it is beneficial to perform block 504 at the calling device 102a, because this avoids the acquired biometric data (and, in some implementations, reference biometric data 207) leaving the calling device 102a. The caller can thereby exercise control over their biometric data. Additionally, performing block 504 at the calling device 102a is particularly beneficial when facial recognition with liveness testing is performed, since it can avoid transmitting a large volume of biometric data (e.g., a video stream) to the authentication server 104.

In further implementations not shown in Figure 5, block 504 can be performed at both the calling device 102a and the authentication server 104. In such implementations, the biometric data acquired at block 502 (or features derived therefrom) is first compared with reference biometric data 207 stored on the calling device 102a. If that comparison is successful, the biometric data acquired at block 502 (or features derived therefrom) is transmitted to the authentication server 104, whereupon it is compared with reference biometric data 307 stored on the authentication server 104. The identity of the caller is only deemed to be verified when both of the comparisons are successful. This two-stage verification process can increase security.

In a variation of the two-stage verification process mentioned in the previous paragraph, biometric data is acquired at two moments in time at block 502. The biometric data is checked to ensure that the biometric data acquired at the first moment in time (or features derived therefrom) is different from the biometric data acquired at the second moment in time (or features derived therefrom). The biometric data acquired at one moment in time (or features derived therefrom) is compared with reference biometric data 207 stored on the calling device 102a. If that comparison is successful, the biometric data acquired at the other moment in time (or features derived therefrom) is transmitted to the authentication server 104, whereupon it is compared with reference biometric data 307 stored on the authentication server 104. The identity of the caller is only deemed to be verified when the biometric data acquired at the two moments in time is different, and when both of the comparisons are successful. This variation on the two-stage verification process can further increase security, by reducing the risk of replay attacks in which a static (i.e. time invariant) replica of the biometric data is repeatedly presented to the biometric reader 216 (or otherwise introduced into the system).

To further reduce the risk of replay attacks, the calling device 102a and/or the authentication server 104 can keep a record of the biometric data (or features derived therefrom) that is used to verify a participant's identity at block 504, and can use that record to check that the biometric data acquired at future occurrences of block 502 is different from that used on previous occurrences of block 504.

When the identity of the caller has been verified at block 504, the method 500 proceeds to block 506. At block 506, the calling device 102a sends an authentication message to the authentication server 104. The authentication message notifies the authentication server 104 that the identity of the caller has been verified. The authentication message is sent via the data network 110. The authentication message may include, for example, a flag that indicates that the identity of the caller has been verified. The authentication message may further include information that identifies the caller, such as the name of the caller or a unique identity number associated with the caller. The authentication message may contain a digital signature to allow the authentication server 104 to confirm that the authentication message originated at the calling device 102a and has not been adulterated. Alternatively or additionally, the authentication message may be encrypted prior to being sent to the authentication server 104.

At block 508, the authentication server 104 receives the authentication message from the calling device 102a.

At block 510, the authentication server 104 verifies the authentication message received from the calling device 102a. For example, the authentication server 104 may verify the authentication message by verifying a digital signature included in the authentication message and/or by successfully decrypting the authentication message using an encryption key associated with the calling device 102a. Optionally, the authentication message may include other information that can be used by the authentication server 104 to verify the authentication message. For example, the authentication message may include a network address (e.g., an Internet protocol (IP) address), a location (e.g., Global Positioning System (GPS) coordinates) and/or an identifier of the calling device 102a (e.g., a serial number or an International Mobile Equipment Identity (IMEI) number).

When the authentication message has been verified at block 510, the method 500 proceeds to block 512. At block 512, the authentication server sends the authentication message to the called device 102b. The authentication message notifies the called device 102b that the identity of the caller has been verified. The authentication message is sent via the data network 110. The authentication message may include, for example, a flag that indicates that the identity of the caller has been verified. The authentication message may further include information that identifies the caller, such as the name of the caller or a unique identity number associated with the caller. The authentication message may contain one or more digital signatures to allow the called device 102b to confirm that the authentication message originated at the calling device 102a and/or was sent via the authentication server 104, and has not been adulterated. Alternatively or additionally, the authentication message may be encrypted prior to being sent to the called device 102b.

At block 514, the called device 102b receives the authentication message from the authentication server. The called device 102b may verify the authentication message in a manner analogous to block 510.

At block 516, the called device 102b may display a notification, update the contact database 209, or both. These options will now be explained in turn.

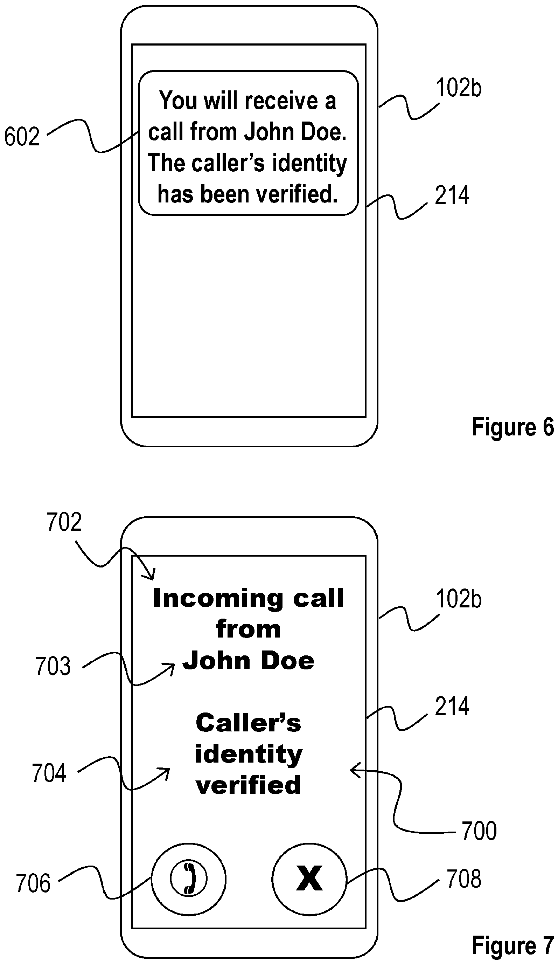

Figure 6 shows an example of a notification 602 that may be displayed at block 516. The notification 602 is displayed on the display 214 of the called device 102b. The purpose of the notification is to inform the callee that identity of the caller has been verified. As shown in Figure 6, the notification 602 may be displayed before the telephone call has been initiated by the calling device. In this manner, the callee can be forewarned that he/she will receive a telephone call from a caller whose identity has been verified.

When the contact database 209 is updated at block 516, a new entry may be added to the contact database 209. The new entry contains the name and contact information

(e.g., a telephone number and/or session initiation protocol (SIP) address) of the caller. Optionally, a phrase such as "Caller's identity verified" may be appended to the name of the caller in the contact database 209. If the contact database 209 already includes an entry for the caller, block 516 may simply include appending a phrase such as "Caller's identity verified" to the name of the caller in the contact database 209. The phrase that is appended to the name of the caller may also include an indication of the date and/or time at which the caller's identity was verified (i.e., the date and/or time at which block 504 was most recently performed successfully). In order for the contact database 209 to be updated, the callee may need to give the authentication application 208 permission to access and modify the contact database 209.

At block 518, the calling device 102a initiates a telephone call to the called device 102b. Purely by way of example, the telephone call may be initiated by the calling device 102a dialling a telephone number of the callee (or, more precisely, dialling a telephone number of the called device 102b). As another example, the telephone call may be initiated by the calling device 102a establishing a SIP session with the called device 102b, using a SIP address associated with the callee. The telephone call may be an audio-only call or a video call (i.e., a call that supports both audio and video data). The call may be performed using either the telephone network 120 or the data network 110.

At block 520, the called device 102b receives the telephone call from the calling device 102a. If the contact database 209 of the called device 102b was updated at block 516, the display 214 of the called device 102b may notify the callee of the identity of the caller by displaying a user interface 700 similar to that shown in Figure 7. The user interface 700 includes a plurality of graphical components 702, 703, 704, 706, 708, all of which can be automatically generated by the in-built telephony application 205 of the called device 102b. Hence, there is no need to install new telephony software on the called device 102b in order to notify the callee that the identity of the caller has been verified.

The graphical components 702, 703, 704, 706, 708 of the user interface 700 will now be explained. Component 702 is a text output that contains the words "Incoming call from", or similar. Component 702 is automatically generated by the telephony application 205 for all incoming calls, regardless of whether the caller has been authenticated in accordance with the present disclosure. Component 703 is a text output that contains the name of the caller (in this case, "John Doe"). The text of component 703 is taken from the name of the caller in the contact database 209, which may be a pre-existing name or a name that was added to the contact database at block 516. Component 704 is a text output that contains the words "Caller's identity verified", or similar. The text of component 704 is taken from the name of the caller in the contact database 209. As noted above, the words "Caller's identity verified" can be appended to the name of the caller in the contact database 209 at block 516. When the called device 102b receives the call at block 520, the name of the caller is identified by looking up the telephone number or SIP address in the contact database 209. The telephone application 205 outputs the name of the caller in its usual manner, thus causing the words "John Doe Caller's identity verified" to be output to the display 214. The callee is thereby notified of the identity of a caller who might otherwise be unknown, as well as being notified that the caller's identity has been verified by the authentication server 104. Components 706 and 708 are buttons that, when activated by the callee, cause the telephone call to be accepted or declined, respectively.

Although Figure 5 shows that the authentication message is received (at block 514) before the telephone call is received (at block 520), it is possible for the authentication message to be received at substantially the same time as the telephone call. It is even possible for the telephone call to be received (at block 520) before the authentication message is received (at block 514) although, in this case, the callee will not be notified in advance of the identity of the caller. It may also be possible for the identity of the caller and/or the callee to be verified at any time during an ongoing telephone call.

Assuming that the callee accepts the telephone call that is received at block 520, the method 500 may proceed to block 522. Blocks 522 to 536 are optional processing operations that may be performed to allow two-way authentication, i.e. to allow the caller to verify the identity of the callee. Blocks 522 to 534 correspond to blocks 502 to 514, respectively, but with all operations that were performed at the calling device 102a now being performed at the called device 102b (and vice versa). Accordingly, the operations performed at blocks 522 to 534 need not be explained in detail.

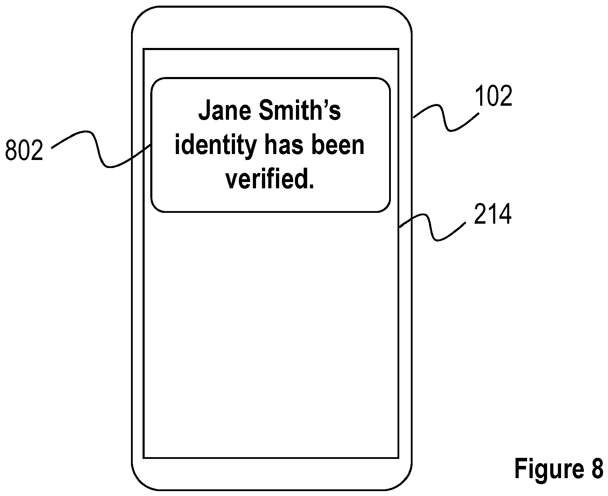

At block 536, the calling device 102a may display a notification. Figure 8 shows an example of a notification 802 that may be displayed at block 536. The notification 802 is displayed on the display 214 of the calling device 102a. The purpose of the notification is to inform the caller that identity of the callee has been verified.

When the telephone call has terminated (or if the callee did not accept the telephone call that was received at block 520), the authentication application 208 of the called device 102b may optionally undo some or all of the updates to the contact database 209 that were made at block 516. In particular, the phrase such as "Caller's identity verified" may be deleted from the name of the caller in the contact database 209. In this manner, the caller will have to verify his/her identity again in order for the called device 102b to generate a user interface 700 as shown in Figure 7. Optionally, the authentication application 208 of the called device 102b may delete all of the caller's details from the contact database 209. The method 500 may then end.

In a variant of the method 500, only the callee is identified. In this variant, blocks 502 to 516 are omitted, and the method begins at block 518.

In another variant of the method 500, the authentication application 208 may be configured to block (e.g., automatically decline) any calls that are received from a participant whose identity has not been verified. In a related variant, the authentication application 208 may be configured to block any calls that are received from a participant who has registered with the authentication server 104 (e.g., by performing method 400), but who has not verified their identity for that particular call. These variants may provide the callee with increased protection against fraudsters.

In yet another variant of the method 500, the communication devices 102 and/or the authentication server 104 may be configured to log successful identity verifications (e.g., at blocks 504 and 524) and/or authenticated calls in a distributed ledger. The distributed ledger may be, for example, a blockchain. The distributed ledger may be inspected by any user who has registered with the authentication server 104, or only by users who are permitted to do so. The distributed ledger can provide an immutable record that a telephone call has taken place between one or more participants whose identity has been verified.

In yet another variant of the method 500, end-to-end encryption between the calling device 102a and the called device 102b is used to avoid interception of authentication messages and/or other communications between those devices. In this variant, an encryption key for end-to-end encryption may be exchanged via the telephone network 120, rather than via the data network 110. For example, the encryption key may be read aloud at one device, transmitted over the telephone network 120, and entered into the other device via a keypad. Alternatively, the encryption key may be transmitted from one device to the other using dual tone multi-frequency (DTMF) signalling over the telephone network 120. This variant has the advantage of being secure in the event that the authentication server 104 is compromised. More specifically, an attacker who gains access to the authentication server 104 is unable to obtain the encryption key because it is sent over the telephone network 120, to which the authentication server 104 has no access. Accordingly, the attacker is unable to intercept any encrypted communications between the devices 102a, 102b, and is unable to impersonate either the caller or callee by constructing falsified messages.

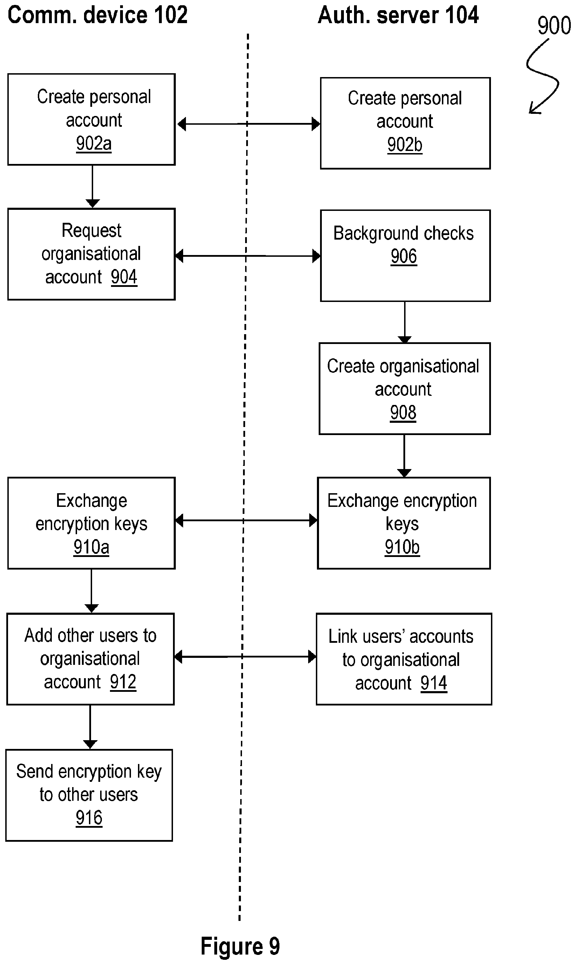

A further variant of the above-mentioned techniques will now be described with reference to Figure 9. Figure 9 is a flow diagram of an example method 900 of registering an organisation with the authentication server 104. The purpose of the method 900 is to allow authenticated calls to be made or received on behalf of an organisation. In this variant, the identity of the participant and his/her authority to represent the organisation are verified.

The method 900 begins at blocks 902a, 902b, in which a user (hereafter referred to as the "superuser") creates a personal account with the authentication server 104. The operations performed at block 902a, 902b can be the same as those performed during method 400, and need not be described again.

At block 904, the superuser submits a request to create an account for the organisation (hereafter referred to as an "organisational account") to the authentication server 104. The request may include information about the organisation, such as its name and address. The organisation may be, for example, a company, a charity or a government body.

At block 906, background checks are optionally performed. The background checks may include, for example, checking that the organisation exists (e.g., using a company register) and checking whether the superuser has authority to create an organisational account for the organisation.

When the background checks (if any) have been completed successfully at block 906, the authentication server 104 creates an organisational account at block 908. The personal account of the superuser may be linked to the organisational account, such that the superuser has permission to add users to the organisational account.

At blocks 910a, 910b, the communication device 102 of the superuser and the authentication server exchange encryption keys. Blocks 910a, 910b are analogous to blocks 416a, 416b, and need not be described in detail.

At block 912, the superuser adds one or more other users to the organisational account. For example, block 912 may include the superuser using a graphical user interface on a communication device 102 to select a user, and adding the selected user to the organisational account.

In response to adding a user to the organisational account, at block 914 the authentication server links a personal account of the user to the organisational account. The personal account of the user may have been previously-created using method 400. Alternatively, if the user does not yet have a personal account, the user may be invited to create one. When the user creates their personal account, it may then be linked to the organisational account.

Also in response to adding a user to the organisational account, at block 916 the superuser's communication device 102 sends an encryption key for the organisation to the user's communication device. The encryption key for the organisation may be a key that was exchanged at blocks 910a, 910b.

Upon completion of method 900, a user who has been added to the organisational account may make or receive a telephone call on behalf of the organisation. This may be achieved by performing a method generally similar to method 500, but in which both the identity of the user and his/her authority to represent the organisation are verified. The authority of the user to represent the organisation may be verified by checking that the user is linked to the organisational account and/or by the user proving that he/she possesses the encryption key for the organisation. When the user sends or receives a telephone call on behalf of the organisation, the notifications shown in any of Figures 6 to 8 may include the name of the organisation (which may be included as an alternative to, or in addition to, the name of the user).

Various measures may be employed to prevent a fraudster from impersonating the organisation during a call. In one example, the authentication server 104 generates a public and private key pair on behalf of the organisation at block 910b. The organisation's public key is published, for example by being made available to download from the authentication server 104 or from another trusted server. The organisation's private key is shared with a user who is authorised to make or receive a telephone call on behalf of the organisation at block 916. When a user conducts a call on behalf of the organisation, authentication messages are digitally signed with the organisation's private key. When a participant wishes to verify whether a call is being conducted on behalf of an organisation, the participant can download the organisation's public key and use it to verify the digital signature. A fraudster attempting to impersonate the organisation can thus be detected by the absence of a digital signature that can be verified with the organisation's public key.

It will be understood that the invention has been described above purely by way of example, and that modifications of detail can be made within the scope of the claims. In particular, the sequence of operations shown in Figures 4, 5, 6 and 9 is merely exemplary. Any of the operations shown in methods 400, 500, 600 and/or 900 may be performed in a different order that achieves substantially the same result. Similarly, some operations that are shown as being performed at a communication device 102 may be performed at the authentication server 104 (and vice versa).

## Claims

1. A method of authenticating a participant in a telephone call, the method comprising:
acquiring biometric data from a first participant in the telephone call;
verifying the identity of the first participant by comparing the acquired biometric data with reference biometric data, the reference biometric data having been previously obtained from an identity document that identifies the first participant; and
sending an authentication message to a second participant in the telephone call, the authentication message including an indication that the identity of the first participant has been verified.

2. A method in accordance with claim 1, further comprising:
initiating the telephone call from a first communication device used by the first participant to a second communication device used by the second participant.

3. A method in accordance with claim 2, wherein the authentication message is sent before initiating the telephone call.

4. A method in accordance with claim 1, further comprising:
receiving the telephone call at a first communication device used by the first participant,
wherein the telephone call is initiated at a second communication device used by the second participant, and
wherein acquiring the biometric data from the first participant, verifying the identity of the first participant, and sending an authentication message are performed in response to receiving the telephone call.

5. A method in accordance with any of the preceding claims, further comprising:
receiving a second authentication message, the second authentication message including an indication that the identity of a second participant in the telephone call has been verified.

6. A method in accordance with claim 5 as dependent on claim 4, wherein the second authentication message is received before the telephone call, and wherein the method further comprises:
in response to receiving the second authentication message, creating or updating an entry for the second participant in a contact database of the first communication device, wherein the created or updated entry indicates that the identity of the second participant has been verified.

7. A method in accordance with any of the preceding claims, further comprising:
reading the reference biometric data from the identity document using an identity document reader of the communication device; and
storing the reference biometric data on the communication device.

8. A method in accordance with any of the preceding claims, wherein:
the telephone call is conducted via a public switched telephone network; and/or
the authentication message is sent via a data network.

9. A method in accordance with any of the preceding claims, wherein verifying the identity of the first participant further comprises:
authenticating the first participant as a member of an organisation.

10. The method of claim 9, wherein the authentication message indicates that the first participant has been authenticated as a member of the organisation.

11. A computer program product comprising instructions which, when executed by a computer, cause the computer to perform a method in accordance with any of the preceding claims.

12. A computer-readable medium comprising instructions which, when executed by a computer, cause the computer to perform a method in accordance with any of claims 1 to 10.

13. An apparatus configured to perform a method in accordance with any of claims 1 to 10.
